(19) **Europäisches Patentamt / European Patent Office / Office européen des brevets**

(11) **EP 1 950 530 B1**

(12) **EUROPEAN PATENT SPECIFICATION**

(45) Date of publication and mention
of the grant of the patent:
**26.04.2017 Bulletin 2017/17**

(51) Int Cl.:
**G01C 21/32** *(2006.01)*

(21) Application number: **07150022.7**

(22) Date of filing: **14.12.2007**

(54) **Road map data structure, road map data storage medium and navigation device**

Straßenkartendatenstruktur, Straßenkartendatenspeichermedium und Navigationsgerät

Structure de données de carte routière, support de stockage de données de carte routière et dispositif de navigation

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **27.12.2006 JP 2006351618**

(43) Date of publication of application:
**30.07.2008 Bulletin 2008/31**

(73) Proprietor: **Aisin AW Co., Ltd.
Fujii-cho
Anjo-shi,
Aichi 444-1192 (JP)**

(72) Inventor: **Takahata, Seiji
Okazaki-shi Aichi 444-8564 (JP)**

(74) Representative: **TBK
Bavariaring 4-6
80336 München (DE)**

(56) References cited:
**WO-A-2006/085412        JP-A- 2002 175 593
US-A1- 2005 058 155**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 950 530 B1

## Description

The present invention relates to a structure of road map data used in a navigation device, for example, and more particularly, to a road map data storage medium which stores the road network data representing roads in connection with plural links, a navigation device using the road map data storage medium, and a respective method.

In the field relevant to the navigation device, the art for displaying the self location and guiding the route to the destination by means of the road map data as the digital data representing the information with respect to the actual road has been known. Generally, such road map data contain road network data at plural levels corresponding to the level of detail or the scale for the display of the road information to be stored. The respective road network data at the corresponding level represent the road in connection with the plural links. As a link ID for identifying the link which forms the road network data, generally, link IDs are sequentially provided in the order of the connection in a link string by the respective link strings including plural successive links each having the common attribute. The link ID structured to have a predetermined numerical range which contains plural successive numbers is known. There has been also known that the range proportional to each link length of the respective links is set to the numerical range of the link ID as disclosed in Japanese Patent No. 3725022 (corresponding to patent application JP-A-2002-175593) and Japanese Patent Application Publication No. JP-A-2005-70482 (corresponding to family member US2005/058155-A1).

In the road map data structure as described above, the link ID has a predetermined numerical range. When updating the road network data by dividing the existing link into plural sections for connecting a new link to the intermediate point of the existing link, the continuity of the link ID sequentially arranged in the order of connection may be maintained. In the aforementioned case, the numerical range of the link ID of the existing link is divided to newly generate plural link IDs so as to be assigned to the respective divided sections of the existing link. This makes it possible to easily update for adding the new link while maintaining the continuity of the link ID.

In the aforementioned road map data structure, many links which form the road network are required to be identified by the link IDs. In order to allow the respective link IDs to have the respective numerical ranges, the digit number used as the link ID becomes inevitably more than the one in the case where the numerical range is not provided. As the numerical range is set to be wider for ensuring large number of division of the link for updating the road network data as described above, the digit number is increased. As the digit of the numerical range of the link ID is increased, the data bit number representing the link ID is required to be large, thus making the data size for representing the link ID unnecessarily large. In the case where each numerical range of the respective link IDs is set to be small for reducing the digit number thereof, multiple division of the specific link is not allowed for the prospective updating of the road network data, thus failing to maintain the continuity of the link ID.

It is an object of the present invention to provide a road map data storage medium capable of appropriately setting the numerical range of each link ID of the respective links, ensuring sufficient number of times for dividing the respective links while maintaining the continuity of the link ID for the prospective updating, and allowing reduction in the data size for representing each link ID of the respective links as small as possible, a navigation device using the road map data storage medium, and a respective method.

This object is solved by a road map data storage medium according to claims 1, a navigation device according to claim 6, and a method according to claim 7, respectively. Advantageous embodiments are shown in the dependent claims.

A road map data storage medium according to the present invention is provided with road network data which represent a road in connection with plural links, wherein a link ID is assigned to each of the links of the road network data, and the link ID has a numerical range set in accordance with both a link length of the link and a road attribute, and further is sequentially set in a connection order within a link string for the each link string composed of the plural links connecting in line. The road attribute includes at least one of a category attribute with respect to a road category of the link, and an area attribute with respect to an area where the link exists.

In the aforementioned road map data storage medium, the numerical range of the link ID of the link with a road attribute with high possibility to be divided accompanied with the addition of the new link upon prospective updating of the road network data with respect to the link length is set to be wide depending on the road attribute of the link. This ensures sufficient number of times for dividing the subject link while maintaining the continuity of the link ID. Meanwhile, the numerical range of the link ID with respect to the link length with the road attribute having the low possibility to be divided is set to be small. This makes it possible to suppress the total numerical range of the link ID required for identifying all the links which form the road network as small as possible, thus reducing the digit number of each numerical range of the respective link IDs. This also makes it possible to realize the road map data structure capable of performing sufficient number of times for dividing the link depending on the road attribute of the link while maintaining the continuity of the link ID for the prospective updating, and capable of suppressing the data size for representing each link ID of the respective links as small as possible.

Further, the numerical range of the link ID may be appropriately set depending on at least one of the road category of the respective links and the area where the respective links exist, which may greatly influence the possibility of dividing the link accompanied with the updating of the road network data.

The numerical range of the link ID is set based on a value obtained by multiplying the link length of the link by an attribute coefficient determined in accordance with the road attribute of the link.

The aforementioned storage medium allows the numerical range of the link ID to be appropriately set depending on the link length and the road attribute of the respective links.

The attribute coefficient is preliminarily set for the road attribute.

In the aforementioned storage medium, as the possibility of dividing the link accompanied with updating of the road network data becomes high, the numerical range of the link ID with respect to the link length may be set to be wide. This ensures sufficient number of times for dividing the link while maintaining the continuity of the link ID, and allows the total numerical range of the link ID required for identifying all the links which form the road network data to be reduced as small as possible. This makes it possible to realize the road map data structure capable of reducing the size of data for representing the link IDs of the respective links as small as possible.

The road attribute ncludes at least three category road attributes of a main road of highway, a side road of highway and a general road; and the attribute coefficient of the category road attribute is made larger in the order of the main road of highway, the side road of highway and the general road.

In the aforementioned case, the possibility of dividing the link corresponding to the main road of highway accompanied with updating of the road network data is low as the new road is not connected to the main road of highway unless the interchange, service area, parking area and the like are newly built. Meanwhile, the possibility that the new road is connected to the general road is relatively high. The possibility that new road is connected to the interchange, service area, parking area, and the side road to the highway, for example, the guide path connected to the main road of the highway is higher than the possibility in case of the main road of highway, and is lower than the possibility in case of the general road. Accordingly, the structure allows the numerical range of the link ID to be appropriately set depending on the possibility of dividing the link based on the road category thereof.

The area attribute section includes at least two area attributes of an urban area and a local area; and the attribute coefficient of the area attribute is made larger in the order of the local area and the urban area.

The frequency of updating the road in the urban area is higher than that of updating the road in the local area. The possibility of dividing the link accompanied with updating of the road network data resulting from connection of the new road is relatively high. Accordingly, the structure allows the numerical range of the link ID to be appropriately set depending on the possibility of dividing the link based on the area where the link exists.

A navigation device according to the present invention includes a map database which stores road map data having the aforementioned road map data storage medium, a self location detection unit for detecting a self location, an application program operated in reference to the road map data; and a guide information output unit operated in accordance with the application program for outputting guide information.

The aforementioned structure allows the map database of the navigation device to be provided with the road map data capable of ensuring sufficient number of times for dividing each link depending on the road attribute of the link while maintaining the continuity of the link ID for the prospective updating of the road network data, and capable of suppressing the size of data for representing the link ID of the link as small as possible. Accordingly, the road network data may be appropriately updated, and the continuity of the link ID may be maintained even after the updating. The resultant navigation device prevents the speed of the processing relative to reading of the road map data from being lowered.

BRIEF DESCRIPTION OF THE DRAWINGS

FIG. 1 is a block diagram schematically showing a structure of a navigation device according to an embodiment of the present invention;

FIG. 2 is an explanatory view showing the layer structure including plural sections which form the road map data;

FIG. 3 is a view showing the correlation of the road network data among plural levels of the road map data;

FIG. 4 is a view showing an exemplary setting of each link ID of links which form the road network data at the respective levels;

FIG. 5 is a view showing exemplary data of the category attribute coefficients corresponding to the respective attribute sections;

FIG. 6 is a view showing exemplary data of the area attribute coefficients corresponding to the respective attribute sections;

FIG. 7 is a block diagram schematically showing the structure of the map updating server unit according to the embodiment of the present invention;

FIG. 8 is a flowchart showing the entire process for generating and transmitting the update data in the map updating server unit;

FIG. 9 is a flowchart showing the process for generating the road map data after the updating in detail; and

FIG. 10 is a view showing an exemplary setting of the link ID.

## DETAILED DESCRIPTION OF THE PREFERRED EMBODIMENTS

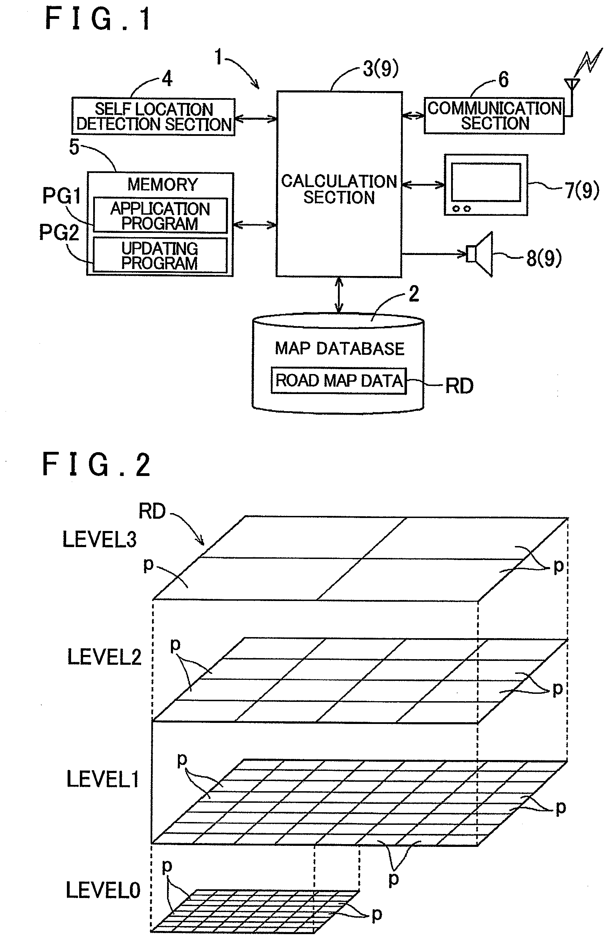

An embodiment of the present invention will be described referring to the drawings. FIG. 1 is a block diagram schematically showing the structure of a navigation device 1 according to the embodiment. The navigation device 1 is structured to perform general navigation functions for displaying the self location, searching the route from the current position to the destination, guiding the route to the destination, retrieving the destination and the like. Referring to FIG. 1, the navigation device 1 is formed of a map database 2, a calculation section 3, a self location detection section 4, a memory 5, a communication section 6, a display input section 7, and a voice output section 8. The respective function sections of the navigation device 1 are formed by mounting the hardware and/or the software (program) for executing various types of the process with respect to the input data, having the calculation section 3 formed of the CPU (Central Processing Unit) as the core component.

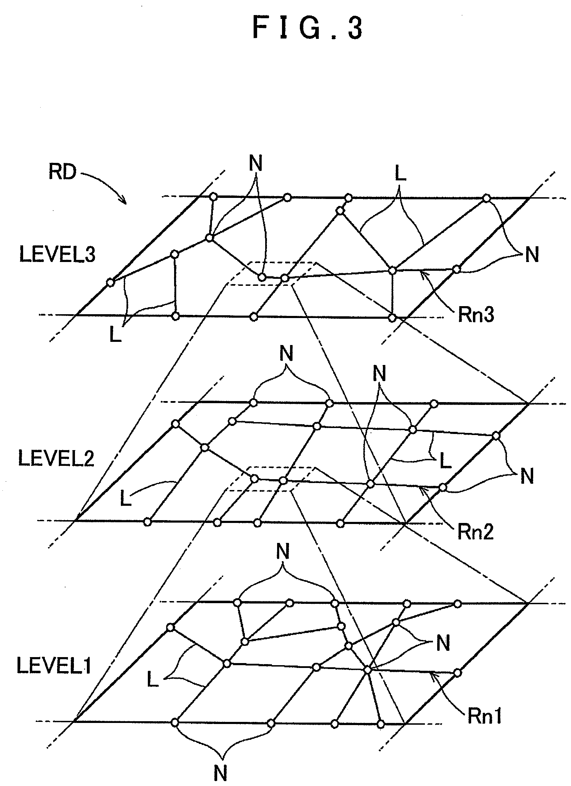

The map database 2 stores road map data RD to which the calculation section 3 refers in accordance with the application program PG1 to be described later. The map database 2 has a hardware structure including a writable storage medium such as a hard disk drive and the flash memory, and a drive unit for driving the storage medium. In the embodiment, the map database 2 corresponds to the "road map data storage medium" which stores the road map data RD according to the present invention. The road map data RD stored in the map database 2 has the data structure according to the present invention. Besides the road map data RD, the map database 2 stores various data (guiding data) for displaying, guiding, searching so as to be used in the application program PG1, which are not shown in the drawing. More specifically, the aforementioned data include image data, voice data, POI (Point of Interest) and the like, each data of which are stored in correlation with the link and node (see FIG. 3) contained in the road map data RD. The structure of the road map data RD will be described in detail referring to FIGS. 2 and 3.

FIG. 2 is an explanatory view showing the layer structure with respect to plural sections p which form the road map data RD. Referring to the drawing, the road map data RD includes plural levels, and the map data at the respective levels are divided into plural sections p corresponding to the level. As the level becomes high, the section p corresponds to the wider area. The section p at the high level contains the area corresponding to the plural sections p at the lower level. In the embodiment, the road map data RD includes four levels from the lowest level 0 to the highest level 3. The map data at the lowest level 0 form the map of the urban area, which is used for showing the road in the urban area in detail to cover the specific area. The map data at the level 1 as the lowest level cover the entire area. The map data at the level from 1 to 3 include road network data Rn used for the route search and the like, respectively.

FIG. 3 shows the correlation of the road network data Rn among the respective levels 1 to 3 of the road map data RD. Referring to the drawing, in the road map data RD, the map data at the plural levels in accordance with the detail level and the display scale of the road information to be stored are provided with road network data Rn (Rn1 to Rn3) in the layer structure. The road network data Rn at the respective levels graphically represent the actual road in connection with the plural links L. In the embodiment, the road network data Rn have three levels from the lowest level 1 to the highest level 3. The single section p at the high level contains the area corresponding to the plural sections p at the lower level. The road network data Rn at the respective levels are structured such that plural links L are connected with one another via nodes N at the respective ends of the links L. Each of the nodes N is set corresponding to the intersection on the actual road. Each of the links L is set corresponding to the road between the respective intersections. When the link L goes beyond the boundary of the section p, the dummy node is set on the boundary of the subject section p irrespective of the intersection on the actual road. The node N includes two types, that is, the actual node set corresponding to the intersection on the real road, and the dummy node virtually set on the boundary of the section irrespective of the actual intersection. In the embodiment, both nodes will be generically referred to as the node N.

In the embodiment, the road network data Rn at the respective levels will be generically referred to as the "Rn". The road network data may be coded as "Rn1" to "Rn3" corresponding to the levels 1 to 3 for the purpose of distinguishing the level. As the level of the road network data Rn becomes lower, the road information becomes more detailed. In the embodiment, the road network data Rn1 at the lowest level 1 contains the information with respect to the roads which covers the entire road category of the road map data, for example, the highway (including the main road and side road), national road, principal prefectural road, prefectural road, other main numbered road, narrow street and the like. The road network data Rn2 and Rn3 at the levels 2 and 3 contain no information with respect to the road with the category regarded as insignificant for searching the route (for example, narrow street).

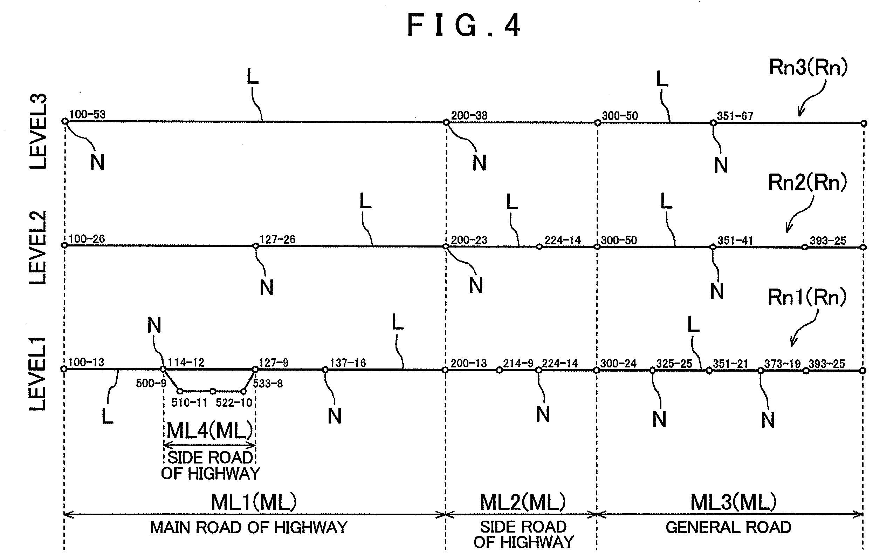

The information data representing the nodes N and links L of the road network data Rn are arranged by the respective link strings ML (multi link) (see FIG. 4) each having the common road attribute and formed of plural links connected in a line in the order of connection in the link string ML at the respective levels (1 to 3). In the embodiment, the name of the actual road, for example, "national road 1", "Meishin Expressway" is used as the common road attribute which specifies the respective link string ML. The link L corresponding to the road with the same name is maintained to form the long link string ML within the section p. The common road attribute which specifies the respective link string ML is not limited to the road name, but various road attributes with respect to the road or the link, for example, the road category, number of lanes, road width and the like may be employed.

The road network data Rn contains attribute information data with respect to the link L and the node N by each link string ML. The attribute information of the node N contains the coordinate information showing the coordinate of the node N, the information showing whether the dummy node or the actual node, the information showing the traffic regulation, the information showing the upper limit level where the respective nodes N exist (levels 1 to 3), the information showing presence or absence of the traffic light and the like. The attribute information of the link L contains the link ID information showing the link ID of the respective link (described later), the configuration information showing the configuration of the link L, the information showing the traffic regulation, the information showing the road category, the road name information, the information showing the road width, the information of the number of lanes, the information of the upper limit level (levels 1 to 3) where the links L exist and the like.

The link ID is assigned to each of the links L in the road map data RD as an exclusive ID (identifier) for identifying the respective links so as not to be overlapped. The road map data RD are structured to have the numerical range for the respective links L of the road network data Rn, which may be set in accordance with the link length of the link L and the road attribute, and to have the link ID which is set to be sequential in the order of connection in the link string ML by the respective link strings ML each having the plural links L connected in the single line. The structure of the aforementioned link ID will be described in detail.

FIG. 4 shows an exemplary setting of the link IDs of the respective links L which form the road network data Rn1 to Rn3 at the respective levels. Referring to the drawing, a predetermined numerical range including plural successive numbers is assigned to the link ID of the link L. The link ID with the numerical range is represented by combining the first number and the difference between the first and the last numbers of the link ID. In the case where the numerical range of the link ID is expressed as "100-13", the number "100" is the first number, and the "13" is the difference between the first and the last numbers. Accordingly, the sequential numerals ranging from 100 to 113 (natural numbers herein) with the numerical range of "14" is assigned as the link ID. The rule for setting the numerical range of the link ID will be described in detail later. In the example shown in FIG. 4, the link string ML formed of plural links L connected in line includes a first link string ML1, a second link string ML2, a third link string ML3, and a fourth link string ML4. In the explanation with respect to the embodiment, the respective link strings are genetically referred to as the code "ML". The codes of "ML1" to "ML4" will be used for distinguishing the respective link strings ML.

Each of the link IDs of the respective links L is set to be sequential with respect to the strings ML1 to ML4 in the order of connection therein. The link IDs of the respective links L in the first link string ML1 of the road network data Rn1 at the level 1 includes "100 - 13", "114-12", "127-9", and "137-16" sequentially from the head of the link L (the leftmost link L shown in FIG. 4). The aforementioned link IDs may be expressed as the numerals as "100-113", "114-126", "127-136", and "137-153", respectively. The link IDs are set such that the numbers are sequentially arranged in the order of connection in the link string ML1. In the road network data Rn2 and Rn3 at the levels 2 and 3 higher than the level 1, the plural links L at the lower level are combined into the single link L. The link ID of the thus combined link L is set as the one obtained by combining the link IDs of the respective links L before the combination. For example, in the first link string ML1 of the road network data Rn2 at the level 2, the link ID of the link L at the level 2 is formed by combining two links L each having the link ID from"100-13" and "114-12" at the level 1 to "100-26" at the level 2. The link ID of the link L at the level 2 is formed by integrating two links L each having the link ID of "127-9" and "137-16" at the level 1 to "127 to 26" at the level 2. The aforementioned structure of the link ID allows the link L at the lower level to be easily correlated with the link L at the higher level based on the link ID.

The rule for setting the numerical range of the link ID will be described. In the embodiment, the numerical range of the link ID is set based on the value obtained by multiplying each link length of the links by the attribute coefficient determined by the road attribute of the link. In the embodiment, the category attribute with respect to the road category, and the area attribute with respect to the area where the respective links exist are used as the road attribute for setting the numerical range of the like ID. In the embodiment, the category attribute coefficient Ca determined in accordance with the category attribute and the area attribute coefficient Cb determined in accordance with the area attribute are used as the attribute coefficients. The numerical range R of the link ID is obtained by calculation of the following equation (1).

$$R = S \times LL \times Ca \times Cb \ldots (1)$$

where "S" denotes the reference number representing the reference numerical range per a unit link length. In the embodiment, the reference number S is set in reference to the numerical range suitable for the link L under the condition where the category attribute is the "general road", and the area attribute is "urban area" to be described later. For example, the reference number may be set to "20" per link length of 100 m. The "LL" denotes the link length indicating the information of the one corresponding to the actual length of the link L. As described above, the link length information is contained in the road network data Rn as the attribute information of the respective links L.

The link ID of the link L is determined by the numerical range R obtained by the aforementioned equation (1) and the first number. In the case where the first number is "100", and the numerical range R is "14", the link ID becomes "100-13". The first number of the link ID is the number (natural number) subsequent to the last number of the link ID of the link L as the previous one to which the subject link L is connected in the link string ML where the link L exists. In other words, the first number of the link ID of the link L subsequent to the one having the link ID of "100-13" becomes "114". In the link L at the head of the link string ML, the first number of the link ID is set such that the link IDs of all the links L which form the link string ML are not overlapped with those in the other link string ML. In the embodiment, the numerical range of the link ID is set with respect to the road network data Rn1 at the level 1 as being the lowest based on the aforementioned rule. The link ID formed by integrating the link IDs of the link L at the level 1 may be assigned to the road network data Rn2 and Rn3 at the higher levels 2 and 3, respectively.

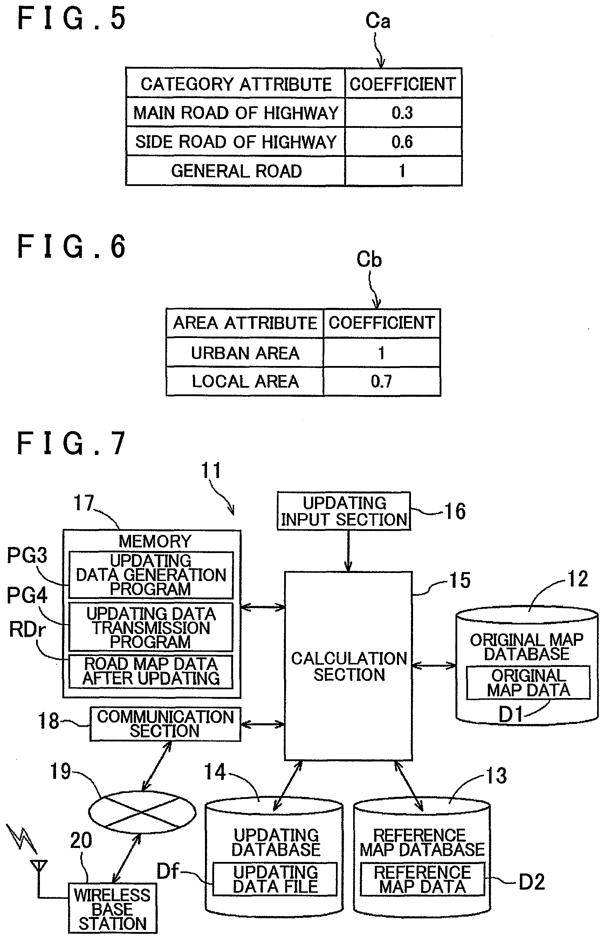

The category attribute coefficient Ca and the area attribute coefficient Cb as the attribute coefficients are preliminarily set for plural attribute sections divided in accordance with the respective road attributes (category attribute or area attribute). The category attribute coefficient Ca and the area attribute coefficient Cb are set to values determined in accordance with the possibility that the link L is divided by updating of the road network data Rn with respect to the respective attribute sections. FIG. 5 is a view showing exemplary attribute sections and corresponding category attribute coefficients Ca. FIG. 6 is a view showing exemplary attribute sections and corresponding area attribute coefficients Cb.

Referring to FIG. 5, in the embodiment, the road category is divided into three sections, that is, "main road of highway", "side road of highway", and "general road" as category attribute section with respect to the category attribute. The category attribute coefficients Ca of the respective category attribute sections are set to the values which become larger in the order of the "main road of highway", "side road of highway", and "general road", that is, "0.3", "0.6", and "1", respectively. The section of the "main road of highway" includes the link L which forms the main road of the highway and toll road. The section of the "side road of highway" includes the link L which forms the interchange, the service area, and the parking area, and the guide path for connecting the main road of highway to the aforementioned facilities. The section of the "general road" includes all the links L which do not belong to the sections of the "main road of highway" and the "side road of highway". More specifically, the link L for forming the national road, principal prefectural road, prefectural road, other main numbered road, and the narrow street are contained. The new road is not connected to the road of the category belonging to the section of the "main road of highway" unless the interchange, service area, parking area and the like are newly built. Accordingly, the possibility that the link L belonging to the aforementioned section is divided by updating of the road network data Rn is low. The possibility that the road is newly connected to the road of the category belonging to the "general road" is relatively high. The possibility that the road is newly connected to the road of the category belonging to the "side road of highway" is at the medium level between the levels of the "main road of highway" and the "general road". Depending on the possibility that the link L is divided by updating of the road network data Rn with respect to the category attribute section, the category attribute coefficient Ca is set to the larger value as the possibility becomes high.

Referring to FIG. 6, in the embodiment, the area is divided into two sections, that is, "urban area" and "local area" as the area attribute section with respect to the area attribute. The area attribute coefficients Cb for the area attribute section are set to the larger values in the order of the "local area" and "urban area", that is, "0.7" and "1", respectively. In the embodiment, the determination whether the link L belongs to the "urban area" section or the "local area" section may be made based on presence/absence of at least a part of the link L is contained in the area on the map which has the map data for forming the urban area map at the level 0. The determination may be easily made based on the urban area map which covers only the part of the urban area rather than the entire area of the road map data RD. Generally, the frequency of updating the road belonging to the "urban area" section is higher than that of updating the road belonging to the "local area" section. The possibility that the link is divided by updating of the road network data resulting from newly connected road becomes relatively high. The area attribute coefficient Cb is set to the larger value as the possibility that the link L is divided by updating of the road network data Rn with respect to the area attribute section becomes high.

In the example shown in FIG. 4, the category attribute sections of the link L which forms the respective link strings ML include the "main road of highway" as the first link string ML1, the "side road of highway" as the second link string ML2, the "general road" as the third link string ML3, and the "side road of highway" as the fourth link string ML4. The fourth link string ML4 forms the service area and the guide path connected thereto, which is provided in parallel with the "main road of highway" as the first link string ML1. The second link string ML2 forms the interchange and the guide path connected thereto, which is provided in series with the "main road of highway" as the first link string ML1. Assuming that the reference number S is "20" per link length of 100 m in the equation (1) under the condition where all the links L that form the first to the fourth link strings ML1 to ML4 belong to the "urban area" section, the numerical range R of the link ID of the link L with the link length of 220 m on the first link string ML1 may be obtained by calculation of the following equation (2).

$$R = (20/100) \times 220 \times 0.3 \times 1 = 13.2 \ldots (2)$$

In the embodiment, the obtained value is rounded to the numerical range R as the natural number. Accordingly, the obtained numerical range R is "13". In the case where the last number of the link ID of the link L preceding the one connected to the link L is "113", the link ID becomes "114 -12".

Under the same condition as described above, the numerical range R of the link ID of the link L with the link length of 100 m in the third link string ML3 may be obtained by calculation of the following equation (3).

$$R = (20/100) \times 100 \times 1 \times 1 = 20 \ldots (3)$$

In the case where the last number of the link ID of the link L preceding the one connected to the link L is "373", the link ID becomes "373- 19".

The numerical range of the link ID is set with respect to at least the road network data Rn1 at the level 1 as the lowest level in accordance with the aforementioned rule. The link ID obtained by combining the link IDs of the links L at the level 1 is assigned to the road network data Rn2 and Rn3 at the higher levels 2 and 3. The link ID having the numerical range set in accordance with the link length of the link L and the road attribute to be sequentially arranged in the order of the connection in the link string ML by each of the link strings ML including plural links L which are connected in line may be assigned to the respective links L of the road network data Rn, that is, Rn2 and Rn3 at the higher levels.

The calculation section 3 functioning as the calculation unit operated in accordance with the application program PG1 stored in the memory 5 is formed of the known calculation unit such as CPU. The application program PG1 contains such programs as the display program, map matching program, route search program, guide program, and retrieving program, which are not shown. The display program displays the self location and the map around the destination on the display screen of the display input section 7 as well as displays the self location on the displayed map. The map matching program is intended to execute the map matching process for matching the self location detected by the self location detection section 4 at the road on the map. The route search program is intended to execute the route searching for searching the route guide to the destination input through the display input section 7 from the starting point such as the self location. The guide program is intended to execute the process for guiding the user with respect to the appropriate route with the aid of the guide displayed on the display screen on the display input section 7 and the voice guide through the voice output section 8 in accordance with the route to the destination determined by the route search program. The retrieving program is intended to retrieve the destination or the point for displaying the map based on the address, phone number, facility name, category and the like. The operation performed by the navigation device 1 through the calculation section 3 activated based on the aforementioned programs is well known, and the explanation thereof, thus will be omitted. The calculation section 3 activated in accordance with the application program PG1 refers to the road map data RD stored in the map database 2 as the map information.

The memory 5 stores the updating program PG2 which allows the calculation section 3 to execute updating of the road map data RD based on the updating data file Df (see FIG. 7) supplied from the map updating server unit 11 which will be described later. In the embodiment, the updating data file Df is formed by combining the updating data with respect to the road map data RD stored in the map database 2, as described later. The road map data RD may be updated by replacing the portion of the road map data RD to be updated with the data contained in the updating data file Df.

The self location detection section 4 functions in detecting the self location of the navigation device 1. The self location detection section 4 includes a GPS receiver, a directional sensor, and a distance sensor (not shown). The information with respect to the coordinate indicating the current location and the traveling direction is obtained based on the information derived from the aforementioned detectors so as to be output to the calculation section 3. In the embodiment, the self location detection section 4 corresponds to the "self location detection unit".

The display input section 7 is formed of a display screen, for example, a liquid crystal display unit and the like, and a touch panel or an operation switch operated in conjunction with the display screen. The voice output section 8 is formed of a speaker and an amplifier. The display input section 7 and the voice output section 8 are connected to the calculation section 3 so as to display and output the voice for the self location display, the route search between two points, route guidance, and the retrieval of the destination in accordance with the operation of the calculation section 3. The display input section 7 receives the input operation of the user to output the input content to the calculation section 3. In the embodiment, the calculation section 3, the display input section 7 and the voice output section 8 correspond to the "guide information output unit 9" according to the present invention.

The communication section 6 serves to perform communication with a map updating server unit 11 to be described later. In the embodiment, the communication section 6 is structured to be allowed to wirelessly receive and transmit data with a wireless base station 20 (see FIG. 7). As the wireless communication method, the known communication network, for example, portable phone network, wireless LAN (Local Area Network) and the like may be employed. As shown in FIG. 7, the communication section 6 is structured to be capable of communicating with the map updating server unit 11 via the wireless base station 20 and the communication network 19 such as the internet. The navigation device 1 is allowed to receive the updating data file Df transmitted from the map updating server unit 11. Preferably the communication section 6 is structured to be allowed to perform wired or wireless communication with the updating terminal owned by the user or the dealer of the navigation device 1, which is not shown in the drawing. The navigation device 1 may be structured to be able to receive the updating data file Df transmitted to the updating terminal via the communication network.

The structure of the map updating server unit 11 which delivers the updating data file Df for updating the road map data RD in the navigation device 1 will be described hereinafter. FIG. 7 is a block diagram schematically showing the structure of the map updating server unit 11. In the embodiment, the map updating server unit 11 generates the updating data file Df based on an original map database 12 which stores original map data D1 to be updated by the input data from the updating input section 16, and a reference map database 13 which stores reference map data D2 having the same contents as those of the road map data RD in the map database 2 of the navigation device 1. The map updating server unit 11 stores the generated updating data file Df in an updating database 14 to deliver the updating data file Df to the navigation device 1 upon communication therewith via a communication section 18. Referring to FIG. 7, the map updating server unit 11 includes the original map database 12, the reference map database 13, the updating database 14, a calculation section 15, an updating input section 16, a memory 17, and the communication section 18. The aforementioned function units of the map updating server unit 11 is formed by having the function units for performing various process with respect to the input data combined with at least one of the hardware or the software (program) using the calculation section 15 formed of the CPU (Central Processing Unit) as the core member. Structures of the respective units will be described.

The original map data D 1 stored in the original map database 12 contain a data structure representing the respective links L for forming the road network data by combining predetermined link ID and the attribute data. In the embodiment, the permanent ID formed of the number, character, code and the like which is irrelevant to the connection order of the link L in the road network data Rn is employed as the link ID for the original map data D1. The attribute data of the respective links L contain the same information data as those of the link L and the node N contained in the aforementioned road map data RD. The original map data D1 are updated by the input data from the updating input section 16. The updating input section 16 includes a display unit, for example, the monitor, and an input device, for example, keyboard, mouse and the like, and is structured to display the content of the original map data D1 via the calculation section 15, and allow the user to input the new road map information to be updated with the input device while confirming the content of the original map data D1. The user is allowed to update the content of the original map data D1 via the updating input section 16 based on the information with respect to the change in the road derived from the field work and the aerial photo.

The reference map data D2 stored in the reference map database 13 have the same contents as those of the road map data RD stored in the map database 2 of the navigation device 1. Likewise the road map data RD, the reference map data D2 contain the map data at plural levels with the layered structure including the road network data Rn (Rn1 to Rn3) in the map data at the respective levels. Likewise the road map data RD, each of the links L in the reference map data D2 is provided with the link ID having the numerical range set in accordance with the link length of the link L and the road attribute to be sequential in the connection order in the link string ML by the respective link strings ML each having the plural links L connected in line as the exclusive ID (identifier) for identification without being overlapped. The further explanation which has been already described will be omitted. The contents of the reference map data D2 are updated so as to match the content of the road map data RDr updated based on the updated original map data D1 after generating the updating data file Df. In this way, the content of the reference map data D2 may be constantly maintained to be the same as that of the road map data RD of the navigation device 1 to be updated by the updating data file Df. In the embodiment, the reference map database 13 corresponds to the "road map data storage medium" which stores the road map data RD according to the present invention.

The updating data file Df stored in the updating database 14 is formed by combining the updating portion of the road map data RD stored in the map database 2 into the single file. The updating data file Df is generated by the calculation section 15 operated in accordance with the updating data generation program PG3 stored in the memory 17, and stored in the updating database 14. In the embodiment, the updating data file Df is formed as the extracted difference data file through the comparison between the updated road map data RDr generated based on the original map data D1 and the reference map data D2 stored in the reference map database 13.

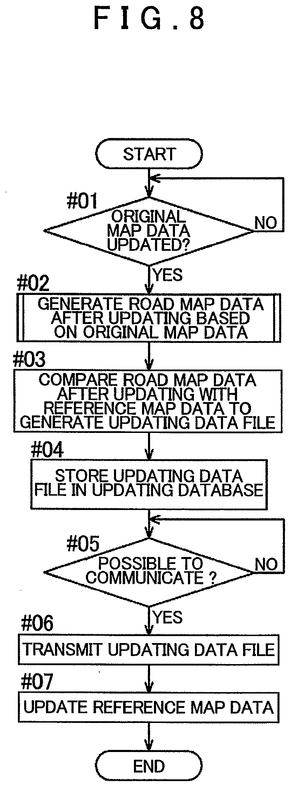

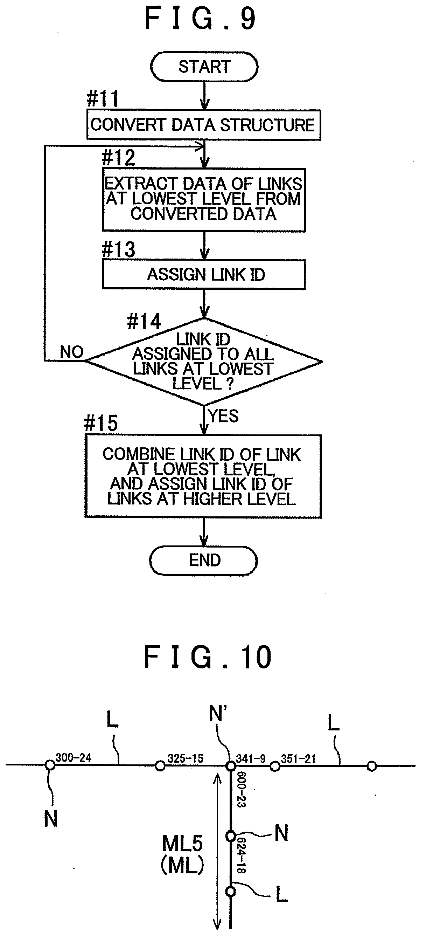

The calculation section 15 functions to calculate in accordance with the updating data generation program PG3 and the updating data transmission program PG4 stored in the memory 17, and is formed of the known calculation unit such as the CPU. The updating data generation program PG3 is intended to generate the updating data file Df based on the updated original map data D1 and the reference map data D2 upon updating of the original map data D1. The updating data transmission program PG4 is intended to transmit the updating data file Df generated in accordance with the updating data generation program PG3 to the navigation device 1. The process for operating the calculation section 15 in accordance with those updating data generation program PG3 and the updating data transmission program PG4 will be described in detail referring to the flowcharts shown in FIGS. 8 and 9.

The communication section 18 functions to communicate with the navigation device 1. In the embodiment, the communication section 18 is structured to be able to communicate with the navigation device 1 via the communication network 19 such as the internet and the wireless base station 20. The communication section 18 is allowed to transmit the updating data file Df to the navigation device 1.

The process for operating the calculation section 15 executed in the map updating server unit 11 in accordance with the updating data generation program PG3 and the updating data transmission program PG4 will be described referring to the flowcharts shown in FIGS. 8 and 9. FIG. 8 shows the flowchart representing the entire process for operating the calculation section 15 in accordance with the updating data generation program PG3 and the updating data transmission program PG4. FIG. 9 shows the flowchart representing the detailed process for generating the road map data RDr after updating in step #02 in FIG. 8.

The flowchart shown in FIG. 8 will be described. When the original map data D1 are updated upon reception of the input data from the updating input section 16 (Yes in step #01), the calculation section 15 generates the road map data RDr after updating based on the original map data D1 in accordance with the updating data generation program PG3. The detailed explanation of the process in step #02 will be described later referring to the flowchart shown in FIG. 9. The generated road map data RDr after updating are the same as the reference map data D2 and the road map data RD stored in the map database 2 of the navigation device 1 as well as the same format except that they are updated in accordance with the updated content of the original map data D1. The updated road map data RDr generated in step #02 are temporarily stored in the memory 17. The calculation section 15 makes a comparison between the updated road map data RDr and the reference map data D2 stored in the reference map database 13 in accordance with the updating data generation program PG3 to generate the updating data file Df (step #03). Specifically, the updated road map data RDr and the reference map data D2 have the common data contents except the difference between data before and after updating of the original map data D1 so as to be compared based on the same data format. The difference data of the updated road map data RDr in reference to the reference map data D2 are extracted and combined to generate the updating data file Df.

The calculation section 15 stores the updating data file Df generated in step #03 in the updating database 14 (step #04). Then it is determined whether or not it is possible to communicate between the communication section 18 and the navigation device 1 (step #05). The communication section 18 communicates with the navigation device 1 via the communication network 19 and the wireless base station 20 as described above. When it is determined that the communication is possible (Yes in step #05), the calculation section 15 transmits the updating data file Df to the navigation device 1 via the communication section 18 (step #06). Then the calculation section 15 updates the reference map data D2 based on the updated road map data RDr (step #07). The process performed in the map updating server unit 11 ends. Upon reception of the updating data file Df, the navigation device 1 allows the calculation section 3 to be operated in accordance with the updating program PG2 for updating the road map data RD in the map database 2 (see FIG. 1).

The process for generating the road map data RDr updated in step #02 will be described in detail referring to the flowchart shown in FIG. 9. The calculation section 15 converts the data structure of the original map data D1 into the same structure as the road map data RD, that is, the structure having the map data at plural levels and layered structure of the road network data Rn (Rn1 to Rn3) for the map data at the respective levels in accordance with the updating data generation program PG3 (step #11). The data of the respective links L at the lowest level 1 are extracted from the converted data (step #12). The link IDs are assigned to the respective extracted links L (step #13). Specifically, the extracted link L is provided with the link ID with the numerical range set in accordance with the link length of the link L and the road attribute and set to be sequential in the connection order in the link string ML at each link string having plural links L connected in line as the exclusive ID (identifier) for identification without being overlapped. The rule for setting the link ID which has been already described before will not be explained herein. The new link ID generated by dividing the link ID before updating is assigned as that of the link L to be divided by updating the road network data Rn resulting from the updating of the original map data D1. As for the link L which does not change with respect to the reference map data D2, the same link ID as that of the reference map data D2 may be used for the updated road map data RDr.

FIG. 10 shows the exemplary case where a new node N' and a link string ML5 are added to the existing link L with the link ID of "325-25" shown in FIG. 4 as indicated by the bold line. In the aforementioned case, it is preferable to divide the link ID of the existing link L to generate the respective link IDs for the divided links L. The numerical range R of the link ID of the divided link L is obtained by calculation of the aforementioned equation (1). For example, in the case where the existing link L with the link length of 130 m, the numerical range R of "26", and the link ID of "325-25" shown in FIG. 4 is divided into the former section of the link string ML (left side shown in FIGS. 4 and 10) with the length of 80 m, and the latter section (left side shown in FIGS. 4 and 10) with the length of 50 m, the link ID may be set in the following manner. Under the condition where the reference number S in the equation (1) is "20" per the link length of 100 m, and all the links L which form the fourth link string ML1 belong to the "urban area" section, the numerical range R of the link ID for the link L with the link length of 80 m after the division may be obtained as follows.

$$R = (20/100) \times 80 \times 1 \times 1 = 16$$

As the numerical range R of the link ID prior to the division is "26", the numerical range R of the link ID of the link L with the link length of 50 m after the division becomes "10". The former side of the link ID after division becomes "325-15" and the latter side of the link ID becomes "341-9" as shown in FIG. 10. The links L which form the added link string ML5 are set such that the link IDs which are not overlapped with those of the links L which form the existing link strings ML1 to ML4 are sequentially arranged in the connection order in the link string ML 5. In this case, "600-23" and "624-18" are set as the link ID as the example.

Referring to FIG. 9, after the link IDs are assigned to the respective links L (step #13), it is determined whether or not the link IDs have been assigned to all the links L at the level 1 as the lowest level (step #14). The process in steps #12 and #13 will be repeatedly executed (No in step #14) until the link IDs are assigned to all the links L at the level 1. When the link IDs have been assigned to all the links L at the level 1 (Yes in step #14), the link IDs of the links L at the level 1 as the lowest level are combined, and the link IDs for the respective links at the levels 2 and 3 as the higher levels are assigned (step #15). After the link IDs are assigned to all the links L contained in the road map data RD, the process for generating the road map data RDr after updating ends.

Other embodiments

(1) In the aforementioned embodiment, the category attribute with respect to the road category in the respective links and the area attribute with respect to the area where the respective links exist are employed as the road attribute for setting the numerical range of the link ID. The present invention, however, is not limited to the aforementioned process in the embodiment. For example, either the category attribute or the area attribute may only be employed as the road attribute for setting the numerical range of the link ID. The road attribute other than the category attribute and the area attribute may be employed for setting the numerical range of the link ID.
(2) In the aforementioned embodiment, three sections of "main road of highway", "side road of highway" and "general road" are employed as the category attribute sections with respect to the category attribute, and two sections of "urban area" and "local area" are employed as the area attribute sections with respect to the area attribute. The present invention is not limited to the sections as described above. Preferably the specific sections of the category attribute and the area attribute are set depending on the possibility of dividing the link L by updating of the road network data Rn. Preferably the values of the category attribute coefficient Ca and the area attribute coefficient Cb are appropriately set depending on the possibility of dividing the link L resulting from updating of the road network data Rn as well.
(3) In the aforementioned embodiment, the link ID is expressed as the combination of the first number of the subject link ID and the difference between the first and the last numbers of the link ID. The structure of the link ID is not limited to the one as described above. The link ID may be expressed as the combination of the first and the last numbers of the numerical range such as "100-113", "114-126", "127-136" and the like.
(4) In the aforementioned embodiment, updating version with respect to the reference map data D2 and the updating data file Df are not described. In the case where the road map data RD of plural navigation devices 1 are updated, data of plural versions which contain the reference map data D2 and the updating data file Df of the old version may be stored in the reference map database 13 and the updating database 14, respectively depending on each updating state of the respective navigation devices 1. There may be the case where all the plural navigation devices 1 do not communicate with the map updating server unit 11 frequently, in other words, one of the navigation devices 1 may have the old road map data without being updated, and the other may have the road map data RD updated by the latest updating data file Df. Preferably, each of the road map data RD, the reference map data D2 and the updating data file Df is provided with the version information for the purpose of updating the road map data RD of all the navigation devices 1. The updating data file Df with the version newer than that of the road map data RD of the navigation device 1 may be employed for updating the old road map data RD. This makes it possible to appropriately update the road map data RD depending on each updating state of the respective navigation devices 1.
(5) In the aforementioned embodiment, the structure of the road map data RD according to the present invention is applied to the road map data of the navigation device 1. The application of the present invention is not limited to the one as described above. The structure is applicable to the road map data for the other use, for example, the map database for retrieving the destination.

The road map data structure according to the present invention is applicable to the use as the navigation device, the map database and the like.

As described above, in a road map data structure having road network data which express the road in connection with plural links, each link of the road network data is provided with a link ID which includes a numerical range set in accordance with a link length of the link and a road attribute to be sequentially arranged in a connection order in a link string by the respective link strings each having plural links connected in line.

**Claims**

1. A road map data storage medium provided with road network data (**Rn**) which represent a road in connection with plural links (L) connected in a line to form a link string (ML), wherein a link ID is assigned to each of the links of the road network data, and the link ID has a numerical range set in accordance with both a link length of the link and a road attribute, and further is sequentially set in a connection order within the link string (**ML**), **characterized in that** the road attribute includes at least one of a category attribute with respect to a road category of the link, and an area attribute with respect to an area where the link exists.

2. The road map data storage medium according to claim 1, wherein the numerical range of the link ID is set based on a value obtained by multiplying the link length of the link by an attribute coefficient (**Ca**) determined in accordance with the road attribute of the link.

3. The road map data storage medium according to claim 2, wherein the attribute coefficient is preliminarily set for the road attribute.

4. The road map data storage medium according to claim 3, wherein:

   the road attribute includes at least three category road attributes of a main road of highway, a side road of highway and a general road; and the attribute coefficient (**Ca**) of the category road attribute is made larger in the order of the main road of highway, the side road of highway and the general road.

5. The road map data storage medium according to claim 3 or 4, wherein:

   the area attribute includes at least two area attributes of an urban area and a local area; and the attribute coefficient (**Cb**) of the area attribute is made larger in the order of the local area and the urban area.

6. A navigation device (**1**) comprising:

   a map database (**2**) configured with road map data (**RD**) provided by the road map data storage medium according to any one of claims 1 to 5; a self location detection unit (**4**) for detecting a self location; an application program (**PG1**) operated in reference to the road map data; and a guide information output unit (**9**) operated in accordance with the application program for outputting guide information.

7. A method comprising:

   storing road map data (**RD**) provided by the road map data storage medium according to any one of claims 1 to 5 in a map database (2) of a navigation device (1) detecting a self location; operating an application program (**PG1**) in reference to the road map data; and operating a guide information output unit (**9**) in accordance with the application program for outputting guide information.

**Patentansprüche**

1. Straßenkartendatenspeichermedium, dem Straßennetzwerkdaten (**Rn**) bereitgestellt sind, die eine Straße im Zusammenhang mit mehreren in einer Linie verbundenen Verbindungen (**L**), um eine Verbindungsfolge (**ML**) zu bilden, repräsentieren, wobei jeder der Verbindungen der Straßennetzwerkdaten eine Verbindungs-ID zugewiesen ist, und die Verbindungs-ID einen numerischen Bereich aufweist, der gemäß sowohl einer Verbindungslänge der Verbindung als auch einem Straßenattribut eingestellt ist, und weiterhin sequentiell in einer Verbindungsreihenfolge innerhalb der Verbindungsfolge (**ML**) eingestellt ist, **dadurch gekennzeichnet, dass** das Straßenattribut ein Kategorieattribut bezüglich einer Straßenkategorie der Verbindung und/oder ein Gebietsattribut bezüglich eines Gebiets, in dem sich die Verbindung befindet, umfasst.

2. Straßenkartendatenspeichermedium gemäß Anspruch 1, wobei der numerische Bereich der Verbindungs-ID basierend auf einem Wert eingestellt ist, der durch multiplizieren der Verbindungslänge der Verbindung mit einem gemäß dem Straßenattribut der Verbindung bestimmten Attributkoeffizienten (**Ca**) der Verbindung erhalten wird.

3. Straßenkartendatenspeichermedium gemäß Anspruch 2, wobei der Attributkoeffizient für das Straßenattribut vorab eingestellt ist.

4. Straßenkartendatenspeichermedium gemäß Anspruch 3, wobei:

   das Straßenattribut zumindest drei Straßenattribute, eine Hauptstraße einer Autobahn, eine Nebenstraße einer Autobahn, und eine allgemeinen Straße, umfasst; und
   der Attributkoeffizient (**Ca**) der Kategorie Straßenattribut in der Reihenfolge der Hauptstraße einer Autobahn, der Nebenstraße einer Autobahn, und der allgemeinen Straße größer ist.

5. Straßenkartendatenspeichermedium gemäß Anspruch 3 oder 4, wobei:

   das Gebietsattribut zumindest zwei Gebietsattribute, ein urbanes Gebiet und ein lokales Gebiet, umfasst; und
   der Attributkoeffizient (**Cb**) des Gebietsattributs in der Reihenfolge lokales Gebiet und urbanes Gebiet größer ist.

6. Navigationsvorrichtung (**1**), mit:

   einer Kartendatenbank (**2**), die mit Straßenkartendaten (**RD**), die durch das Straßenkartendatenspeichermedium gemäß einem der Ansprüche 1 bis 5 bereitgestellt sind, konfiguriert ist;
   einer Selbstortungserfassungseinheit (**4**) zum Erfassen einer eigenen Position;
   einem Anwendungsprogramm (**PG1**), das mit Bezugnahme auf die Straßenkartendaten betrieben wird; und
   einer Führungsinformationenausgabeeinheit (**9**), die gemäß dem Anwendungsprogramm zum Ausgeben von Führungsinformationen betrieben wird.

7. Verfahren, mit:

   Speichern von Straßenkartendaten (**RD**), die durch das Straßenkartendatenspeichermedium gemäß einem der Ansprüche 1 bis 5 in einer Kartendatenbank (**2**) einer Navigationsvorrichtung (**1**) bereitgestellt sind;
   Erfassen der eigenen Position;
   Betreiben eines Anwendungsprogramms (**PG1**) mit Bezugnahme auf die Straßenkartendaten;

und
Betreiben einer Führungsinformationenausgabeeinheit (**9**) gemäß dem Anwendungsprogramm zum Ausgeben von Führungsinformationen.

**Revendications**

1. Support de stockage de données de carte routière doté de données de réseau routier (Rn) qui représentent une route en connexion avec plusieurs raccordements (L) connectés dans une ligne pour former une chaîne de raccordements (ML), dans lequel un identifiant de raccordement est affecté à chacun des raccordements des données de réseau routier, et dans lequel l'identifiant de raccordement présente une plage numérique définie selon, à la fois, une longueur de raccordement du raccordement, et un attribut de route, et lequel est en outre défini séquentiellement dans un ordre de connexion au sein de la chaîne de raccordements (ML) ;
   **caractérisé en ce que** :

   l'attribut de route inclut au moins l'un parmi un attribut de catégorie relativement à une catégorie de route du raccordement, et un attribut de zone relativement à une zone où existe le raccordement.

2. Support de stockage de données de carte routière selon la revendication 1, dans lequel la plage numérique de l'identifiant de raccordement est définie sur la base d'une valeur obtenue en multipliant la longueur de raccordement du raccordement par un coefficient d'attribut (Ca) déterminé selon l'attribut de route du raccordement.

3. Support de stockage de données de carte routière selon la revendication 2, dans lequel le coefficient d'attribut est préalablement défini pour l'attribut de route.

4. Support de stockage de données de carte routière selon la revendication 3, dans lequel :

   l'attribut de route comprend au moins trois attributs de route de catégorie d'une route principale d'autoroute, d'une route secondaire d'autoroute, et d'une route générale ; et
   le coefficient d'attribut (Ca) de l'attribut de route de catégorie est augmenté dans l'ordre de la route principale d'autoroute, de la route secondaire d'autoroute et de la route générale.

5. Support de stockage de données de carte routière selon la revendication 3 ou 4, dans lequel :

l'attribut de zone inclut au moins deux attributs de zone, à savoir d'une zone urbaine et d'une zone locale ; et

le coefficient d'attribut (Cb) de l'attribut de zone est augmenté dans l'ordre de la zone locale et de la zone urbaine.

6. Dispositif de navigation (1) comprenant :

une base de données de cartes (2) configurée avec des données de carte routière (RD) fournies par le support de stockage de données de carte routière selon l'une quelconque des revendications 1 à 5 ;

une unité de détection d'auto-localisation (4) destinée à détecter une auto-localisation ;

un programme d'application (PG1) exploité en référence aux données de carte routière ; et

une unité de génération en sortie d'informations de guidage (9) exploitée selon le programme d'application en vue de générer en sortie des informations de guidage.

7. Procédé comprenant les étapes ci-dessous consistant à :

stocker des données de carte routière (RD) fournies par le support de stockage de données de carte routière selon l'une quelconque des revendications 1 à 5, dans une base de données de cartes (2) d'un dispositif de navigation (1) ;

détecter une auto-localisation ;

exploiter un programme d'application (PG1) en référence aux données de carte routière ; et

exploiter une unité de génération en sortie d'informations de guidage (9) selon le programme d'application pour générer en sortie des informations de guidage.

# F I G . 1

# F I G . 2

# FIG.3

FIG.4

# F I G . 5

Ca

| CATEGORY ATTRIBUTE | COEFFICIENT |
|---|---|
| MAIN ROAD OF HIGHWAY | 0.3 |
| SIDE ROAD OF HIGHWAY | 0.6 |
| GENERAL ROAD | 1 |

# F I G . 6

Cb

| AREA ATTRIBUTE | COEFFICIENT |
|---|---|
| URBAN AREA | 1 |
| LOCAL AREA | 0.7 |

# F I G . 7

# FIG.8

START

#01 ORIGINAL MAP DATA UPDATED? —— NO

YES

#02 GENERATE ROAD MAP DATA AFTER UPDATING BASED ON ORIGINAL MAP DATA

#03 COMPARE ROAD MAP DATA AFTER UPDATING WITH REFERENCE MAP DATA TO GENERATE UPDATING DATA FILE

#04 STORE UPDATING DATA FILE IN UPDATING DATABASE

#05 POSSIBLE TO COMMUNICATE ? —— NO

YES

#06 TRANSMIT UPDATING DATA FILE

#07 UPDATE REFERENCE MAP DATA

END

# F I G . 9

```
              ( START )
                  │
  #11             ▼
      ┌──────────────────────────┐
      │  CONVERT DATA STRUCTURE   │
      └──────────────────────────┘
          │           │
          │   #12     ▼
          │   ┌──────────────────────┐
          │   │  EXTRACT DATA OF LINKS │
          │   │  AT LOWEST LEVEL FROM  │
          │   │    CONVERTED DATA      │
          │   └──────────────────────┘
          │   #13     │
          │   ┌──────────────────────┐
          │   │    ASSIGN LINK ID     │
          │   └──────────────────────┘
          │           │
          │    #14    ▼
          │        ╱       ╲
          │      ╱   LINK ID  ╲
      NO  │    ╱  ASSIGNED TO ALL ╲
      └───────  LINKS AT LOWEST
               ╲    LEVEL ?   ╱
                 ╲         ╱
                     │ YES
  #15                ▼
      ┌──────────────────────────┐
      │  COMBINE LINK ID OF LINK  │
      │    AT LOWEST LEVEL,       │
      │  AND ASSIGN LINK ID OF    │
      │  LINKS AT HIGHER LEVEL    │
      └──────────────────────────┘
                  │
                  ▼
              ( END )
```

# F I G . 10

**EP 1 950 530 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3725022 B
- JP 2002175593 A
- JP 2005070482 A
- US 2005058155 A1